# EUROPEAN PATENT SPECIFICATION

(11) **EP 3 926 281 B1**
(45) Date of publication and mention of the grant of the patent: **22.03.2023**
(21) Application number: 20461541.3
(22) Date of filing: 17.06.2020
(51) Int. Cl.: F28D 7/16, F02M 26/32, F28D 9/00, F28F 9/02

(54) **A WATER CHARGE AIR-COOLER**
WASSERLADELUFTKÜHLER
REFROIDISSEUR D'AIR DE SURALIMENTATION D'EAU

(43) Date of publication of application: 22.12.2021
(73) Proprietor: Valeo Autosystemy Sp. z o.o., 32 050 Skawina (PL)
(72) Inventor: JUGOWICZ, Andrzej, 32 050 Skawina (PL); WIDZYK, Lukasz, 32 050 Skawina (PL); LIPOWSKI, Mateusz, 32 050 Skawina (PL); PIETRZAK, Lukas, 32 050 Skawina (PL)
(74) Representative: Valeo Systèmes Thermiques

(56) References cited:
- EP-A1- 3 404 247
- WO-A1-2013/059941
- US-A1- 2018 106 221
- US-A1- 2020 033 074

## Description

The present invention relates to a heat exchanger, particularly, the present invention relates to a Water Charge Air-Cooler (WCAC) for a vehicle. US 2020/033074 A1 discloses a heat exchanger with the features of the preamble of claim 1.

The Water Charge Air-Cooler includes a housing, a first waterbox also referred to as a first tank, and a second waterbox, also referred to as a second tank. The first waterbox and the second waterbox are in fluid communication with an interior of the housing via a first opening and a second opening respectively. The housing receives a plurality of heat exchange elements for example, tubes defining airflow passages through which air to be cooled flows. In case the heat exchange elements are tubes, the airflow passages are formed within the tubes. In case the heat exchange elements are plates, the airflow passages are formed between adjacent plates. The first opening is for ingress of coolant inside the housing and around the airflow passages for extracting heat from air flowing through the airflow passages. The second opening is for egress of the coolant from the housing after the coolant had extracted heat from air flowing through the airflow passages.

Generally, the coolant tends to follow the shortest path between the first opening and the second opening. Consequently, the coolant egresses from the second opening of the housing while extracting limited amount of heat from air flowing through the airflow passages. Due to such tendency of the coolant to follow the shortest path between the first opening and the second opening and non-uniform distribution of coolant across a heat exchanger core, particularly, the airflow passages, there is formation of dead zones in the heat exchanger core disposed inside the housing. Further, there is insufficient contact and heat transfer between air flowing through the airflow passages and the coolant surrounding the airflow passages and the coolant escapes through the second opening with limited extraction of heat from the air flowing through the airflow passages. Accordingly, the thermal efficiency and performance of the Water Charge Air Cooler is drastically reduced. Prior art documents disclose arrangements for uniformly distributing the coolant flow across the air flow passages and prevent formation of dead zones inside the heat exchanger core disposed inside the housing. However, such arrangements intrude into the interior of the housing and occupy space, thereby giving rise to packaging issues, reducing the number of heat exchange elements receivable inside the housing and adversely affecting heat exchange capacity of the Water Charge Air Cooler. Further, the configuration of the Water Charge Air Cooler, particularly, the orientation of the heat exchanger elements, relative position of the first opening and the second opening with respect to the heat exchange tubes varies and the arrangement for addressing the issue of dead zone formation is required to be flexible based on the configuration of the Water Charge Air-Cooler.

Accordingly, there is a need for a Water Charge Air cooler that obviates the problem of inefficient heat exchange and reduced performance faced by conventional Water Charge Air cooler due to formation of dead zones in the heat exchanger core thereof. Further, there is a need for an arrangement for uniformly distributing a coolant across the core, particularly, the heat exchange elements received inside a heat exchange housing to prevent formation of dead zones without intruding inside the housing and without affecting the number of heat exchanger elements receivable inside the housing. Further, there is a need for an arrangement for preventing formation of dead zone inside a housing of a Water Charge Air cooler that provides flexibility of being configured based on Water Charge Air Cooler's configuration, particularly, based on orientation of heat exchange elements, relative position of first opening and second opening with respect to the heat exchange elements.

An object of the present invention is to provide a Water Charge Air cooler that obviates the problem of inefficient heat exchange and reduced performance faced by conventional Water Charge Air cooler due to formation of dead zones in the heat exchanger core.

Another object of the present invention is to provide a Water Charge Air cooler and an arrangement to uniformly distribute a coolant across heat exchange elements received inside a housing of the Water Charge Air cooler to prevent formation of dead zones.

Yet another object of the present invention is to provide a Water Charge Air cooler and an arrangement to uniformly distribute a coolant across heat exchange tubes received inside a housing of the Water Charge Air cooler without intruding inside the housing and without affecting the number of heat exchanger elements receivable inside the housing.

Still another object of the present invention is to provide a Water Charge Air cooler an arrangement to prevent dead zone formation inside a heat exchanger core disposed in the housing of the Water Charge Air cooler that provides flexibility to be configured based on Water Charge Air Cooler's configuration.

Yet another object of the present invention is to provide a Water Charge Air cooler configured with an arrangement to prevent dead zone formation inside a heat exchanger core disposed in the housing of the Water Charge Air cooler that is simple in configuration and convenient to manufacture.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

A heat exchanger for a vehicle is disclosed in accordance with an embodiment of the present invention. The heat exchanger includes a housing, a first waterbox and a second waterbox. The housing receives a plurality of heat exchange elements defining airflow passages. The first waterbox is in fluid communication with an interior of the housing via a first opening to distribute coolant around the airflow passages defined by the plurality of heat exchange elements. The second waterbox is spaced from the first waterbox and is in fluid communication with the interior of the housing via a second opening to collect the coolant from the interior of the housing. At least one panel is aligned with at least one of the first opening and the second opening to limit flow there through. Each panel includes a plurality of apertures and a plurality of deflectors. The apertures uniformly distribute coolant flowing there through. The plurality of deflectors are protruding from the apertures towards the inner volume of the respective waterbox and are connected to the inner surface of the waterbox.

Particularly, the length of the plurality of deflectors is varying.

Specifically, the first opening is disposed proximal to a first lateral side of the housing, whereas the second opening is disposed proximal to a second lateral side opposite to the first lateral side.

Generally, the first opening and the second opening are extending along at least a portion of a width of the housing.

Specifically, the panel is complimentary to the respective first opening and the second opening extending along at least a portion of a width of the housing and lateral dimension of the panel is gradually decreasing along length thereof.

In accordance with an embodiment of the present invention, the panel is gradually decreasing axially in steps along length thereof.

Further, the panel includes a flange along at least a portion of a periphery thereof that flushes against and is received in a complimentary depression formed around the corresponding first opening and the second opening.

Generally, the flange is received in the complimentary depression formed around the corresponding first opening and the second opening and is joined thereto by brazing.

Generally, the plurality of apertures are so arranged on the panel that dimension thereof is gradually changing along length of the panel.

In accordance with an embodiment of the present invention, the plurality of apertures are so arranged on the panel that dimension thereof is gradually decreasing along length of the panel.

Alternatively, the plurality of apertures is so arranged on the panel that dimension thereof is gradually increasing along length of the panel.

Specifically, the plurality of apertures are formed along the length of the panel by stamping operation.

Generally, the plurality of deflectors are integrally formed with the panel by stamping and bending operation.

Specifically, the plurality of deflectors formed on the panel covering the first opening are formed on the lateral sides of the apertures, the deflectors either at same angle or different angles are adapted to direct coolant from the first waterbox towards a region near the first lateral side of the housing as coolant passes through the corresponding apertures.

Similarly, the plurality of deflectors formed on the panel covering the second opening are formed on the lateral sides of the apertures, the deflectors either at same angle or different angles are adapted to receive coolant in the second waterbox from a region near the second lateral side of the housing as coolant passes through the corresponding apertures.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
**FIG. 1** illustrates a schematic representation of a heat exchanger, particularly a conventional Water Charge Air-Cooler;
**FIG. 2a** illustrates a schematic representation of a Water Charge Air-Cooler in accordance with an embodiment of the present invention;
**FIG. 2b** illustrates a sectional view of a Water Charge Air-Cooler in accordance with an embodiment of the present invention;
**FIG. 3** illustrates an isometric view of the Water Charge Air-Cooler of **FIG. 2b****;**
**FIG. 4** illustrates an isometric view of a top plate forming a housing of the Water Charge Air-Cooler of **FIG. 3**, the top plate is configured with a first waterbox and a second waterbox;
**FIG. 5** illustrates an isometric view of a panel that can be aligned with a first opening or a second opening corresponding to a respective first waterbox or a second waterbox formed on a top wall of **FIG. 4**;
**FIG. 6** illustrates another isometric view of the Water Charge Air-Cooler of **FIG. 3** without the top face to depict position of the panels and other internal details; and
**FIG. 7** illustrates still another isometric view of the Water Charge Air-Cooler of **FIG. 3****.**

It must be noted that the figures disclose the invention in a detailed enough way to be implemented, said figures helping to better define the invention if needs be. The invention should however not be limited to the embodiment disclosed in the description.

The present invention envisages a Water Charge Air-Cooler. The Water Charge Air-Cooler includes a housing, a first waterbox and a second waterbox. The housing receives a plurality of heat exchange elements defining airflow passages. The first waterbox is in fluid communication with an interior of the housing via a first opening to distribute a coolant to the interior of the housing and around the airflow passages defined by the heat exchange elements that can be tubes or plates. The second waterbox is spaced from the first waterbox and is in fluid communication with the interior of the housing via a second opening to collect the coolant from the interior of the housing and around the air-flow passages after the coolant had extracted heat from air flowing through the airflow passages. At least one panel is aligned with at least one of the first opening and the second opening. Each panel includes a plurality of apertures and a plurality of deflectors. The apertures configured on the panel ensure uniform distribution of the coolant flowing there through. The deflectors improve connection between the respective panel and the housing or the waterbox in case the waterbox is separate from the housing. More specifically, the deflectors provide additional brazing surface for forming secure brazing connection between the respective panel and either one of the housing and the waterbox. The plurality of deflectors are protruding from the apertures towards the inner volume of the respective waterbox and are connected to the inner surface of the waterbox. The at least one deflector configured around at least one aperture slightly hinders coolant flow through the respective aperture and manoeuvres coolant flow circulation path P' between the first opening and the second opening to other than the shortest path between the first opening and the second opening. The at least one deflector further guides and directs the coolant received in the waterbox to the airflow passages. Such configuration of the panels in the Water Charge Air-Cooler ensures that the coolant is uniformly distributed across the core of the Water charge Air-Cooler and the formation of dead zones is eliminated. Although, the use of panels with apertures and deflectors to manoeuvre fluid flow circulation path between the first opening and the second opening is explained with the example of Water Charge Air-Cooler in forthcoming description and the accompanying drawings. However, the panels of the present invention is not limited to use in Water Charge Air-Cooler only and finds application in any heat exchanger where heat exchange fluid is required to be uniformly distributed across the core of the heat exchanger and formation of dead zone is required to be prevented.

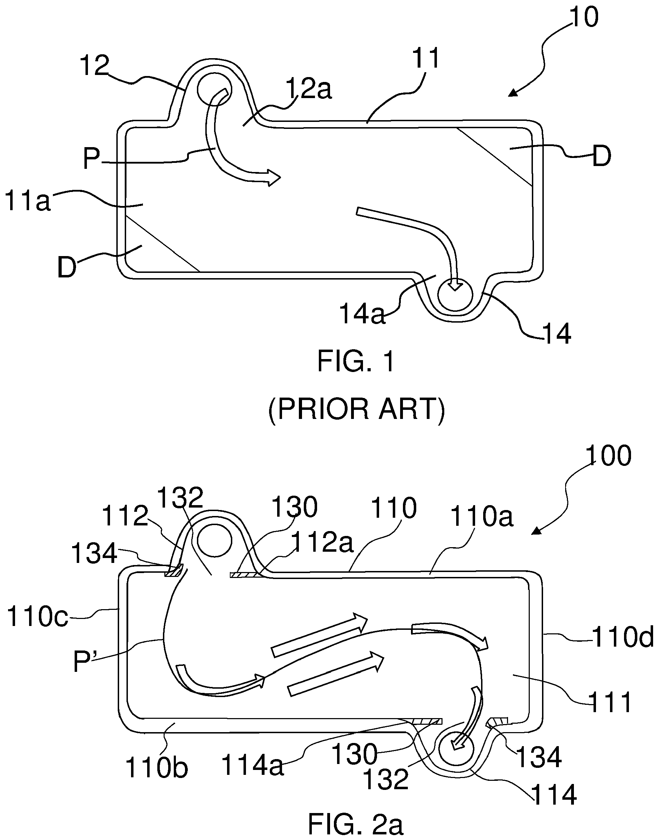

**FIG. 1** illustrates a schematic representation of a conventional Water Charge Air-Cooler **10**. The Water Charge Air-Cooler **10** includes a first waterbox **12** and a second waterbox **14** that are in fluid communication with an interior **11a** of a housing **11** via a first opening **12a** and a second opening **14a** respectively. In case of the conventional Water Charge Air-Cooler **10**, a coolant follows a shortest flow path P between the first opening **12a** and the second opening **14a**. Due to such tendency of the coolant to follow the shortest path P between the first opening **12a** and the second opening **14a** and non-uniform distribution of coolant across the heat exchanger core, particularly, the airflow passages, there is formation of dead zones **D** in the heat exchanger core received inside the housing **11**. Further, due to such tendency of the coolant to exit the heat exchanger through the second opening **14a** without sufficient heat exchange with air flowing through the airflow passages, there is insufficient contact and heat exchange or heat transfer between air flowing through the airflow passages and the coolant, and the coolant exits the heat exchanger through the second opening **14a** without extracting heat from the air flowing through the airflow passages. Accordingly, the thermal efficiency and performance of the conventional Water Charge Air Cooler **10** is drastically reduced.

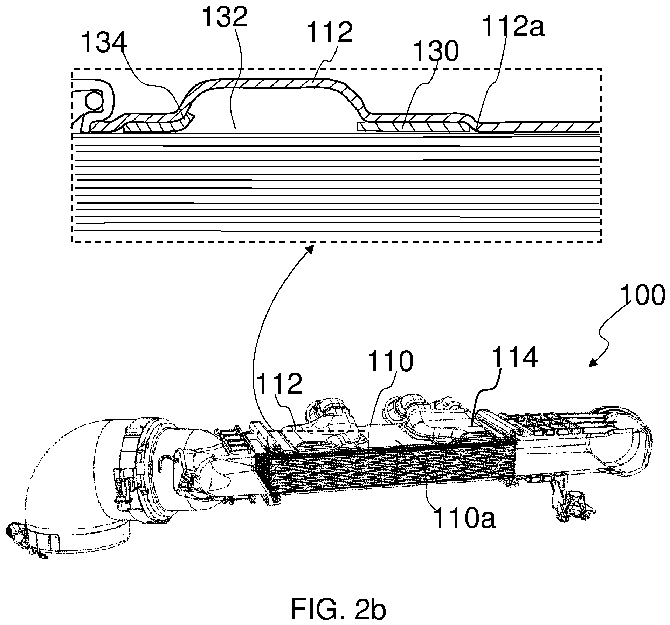

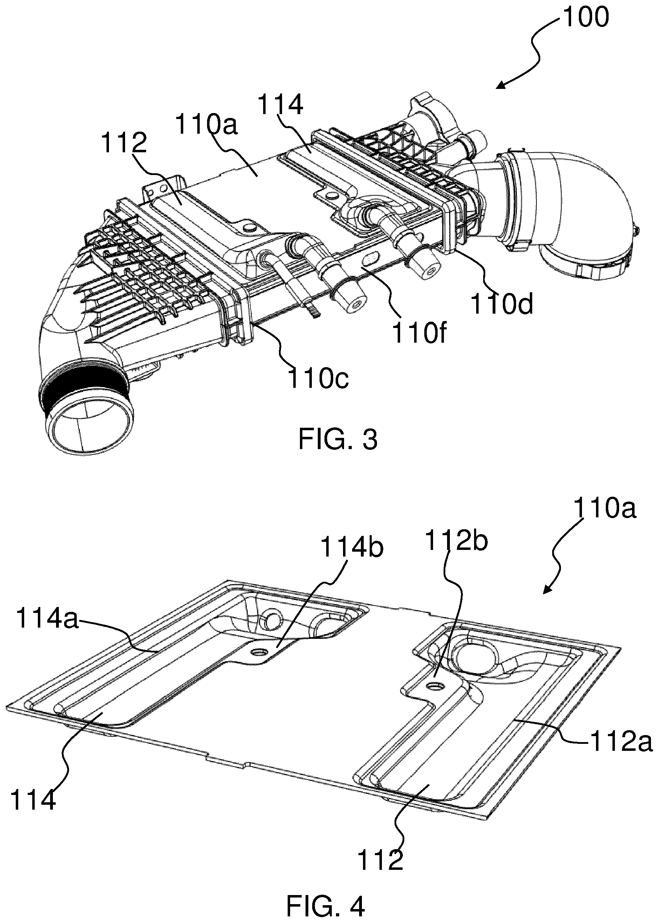

To overcome the drawbacks associated with conventional Water Charge Air-cooler, a heat exchanger, particularly, a Water Charge Air-Cooler **100** is disclosed in accordance with an embodiment of the present invention. Although, the forthcoming description and the accompanying drawings explain the present invention with example of Water Charge Air-Cooler, however, the invention is also applicable of other heat exchangers as well. **FIG. 2a** illustrates a schematic representation of the Water Charge Air-Cooler **100.** **FIG. 2b** illustrates a sectional view of the Water Charge Air-Cooler **100** in accordance with an embodiment of the present invention. The Water Charge Air-Cooler **100** includes a housing **110** as illustrated in **FIG. 2a**, a first waterbox **112**, a second waterbox **114** as illustrated in **FIG. 2a**, **FIG. 3** and **FIG. 4****.** The housing **110** receives a plurality of heat exchange elements **120** that can be either heat exchange tubes or heat exchange plates for defining airflow passages through which air to be cooled flows. The first waterbox **112** and the second waterbox **114** are extending along at least a portion of a width of the housing **110**. The first waterbox **112**, particularly, an interior of the waterbox is in fluid communication with an interior **111** of the housing **110** via a first opening **112a** to distribute coolant around the airflow passages defined by the plurality of heat exchange elements **120**. The second waterbox **114** is spaced from the first waterbox **112** and is in fluid communication with the interior **111** of the housing **110** via a second opening **114a** to collect the coolant from the interior **111** of the housing **110**, after the coolant had extracted heat from air flowing through the airflow passages. More specifically, the first opening **112a** is for ingress of the coolant inside the interior **111** of the housing **110** and around the airflow passages defined by the heat exchange elements **120** from the first waterbox **112**. Similarly, the second opening **114a** is for the egress of coolant from the interior **111** of the housing **110** to the second waterbox **114**, after the coolant has extracted heat from air flowing through the airflow passages. The first waterbox **112** along with the first opening **112a** and the second waterbox **114** along with the second opening **114a** is either on opposite sides of the Water Charge Air-cooler **100** as illustrated in **FIG. 2** or on the same side of the Water Charge Air-cooler **100** as illustrated in **FIG. 3****.**

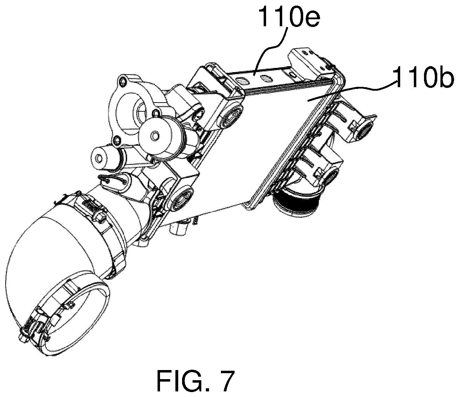

The housing **110** includes a top wall **110a** (illustrated in **FIG. 3****)**, a bottom wall **110b** (illustrated in **FIG. 7****)**, a pair of lateral side walls **110c** and **110d** (illustrated in **FIG. 3****)**, and a pair of front and rear side walls **110e** and **110f** connecting the top wall **110a** and the bottom wall **110b** to define an enclosure. Generally, the housing **110** is having a modular configuration to provide access to the interior of the housing **110** for maintenance, particularly, service or replacement of the elements disposed inside the housing **110.** The first waterbox **112** and the second waterbox **114** are either integral with the housing **110** or separate from the housing **110** and assembled thereto. For example, the first waterbox **112** and the second waterbox **114** are integral with any of the walls of the housing **110**. More specifically, the first waterbox **112** and the second waterbox **114** are in the form of cavities formed on any of the walls of the housing **110** and the interface of the cavities acts as the first opening **112a** and the second opening **114a**. For, example, the top wall **110a** includes the first waterbox **112** and the second waterbox **114** formed thereon as illustrated in **FIG. 4** and in enlarged view of a portion of the Water charged Air cooler depicted in **FIG. 2b**. In another example, the first waterbox **112** and the second waterbox **114** are separate from the housing **110**. The first waterbox **112** and the second waterbox **114** are having closed ends and open ends connected by sidewalls to define an enclosure, the open ends of the first waterbox **112** and the second waterbox **114** are aligned with the respective first opening and the second opening formed on any of the walls of the housing **110**. However, the present invention is not limited to any particular configuration of the first waterbox **112** and the second waterbox **114** and the way in which the first waterbox **112** and the second waterbox **114** are in fluid communication with the interior **111** of the housing **110.**

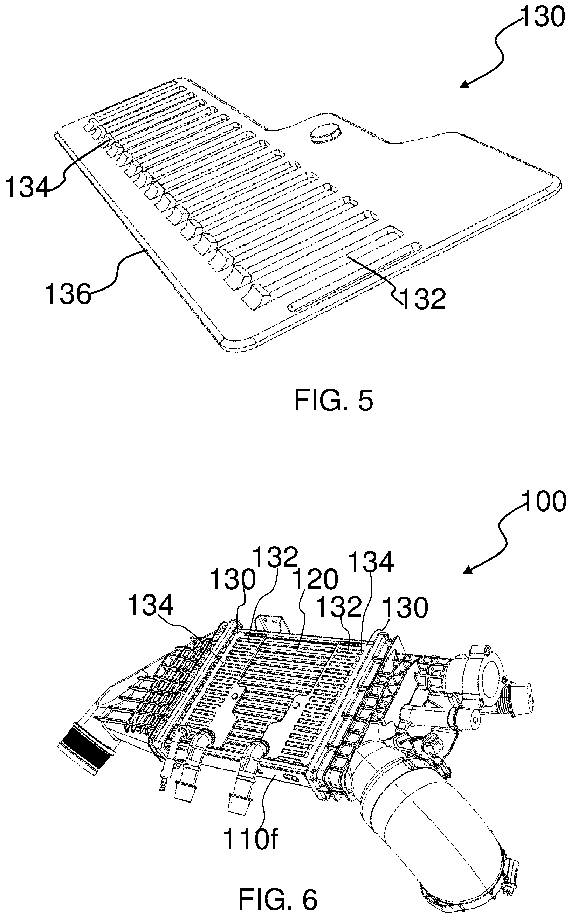

The Water Charge Air-Cooler **100** further includes at least one panel **130** that is aligned with at least one of the first opening **112a** and the second opening **114a.** Each panel **130** includes a plurality of apertures **132** and a plurality of deflectors **134** as illustrated in **FIG. 5****.** Specifically, the Water Charge Air-Cooler **100** includes the panels **130** configured with the apertures **132** and the deflectors **134**, wherein the panels **130** are aligned with the first opening **112a** and the second opening **114a** to limit flow there-through. The plurality of deflectors **134** are protruding from the apertures **132** towards the inner volume of the respective waterbox **112** and **114** and are connected to the inner surface of the respective waterbox **112** and **114** as illustrated in the enlarged view of portion of the Water Charge Air-Cooler **100** depicted in **FIG. 2a**. The deflectors **134** are disposed around the apertures **132**. In one example, the deflectors **134** are disposed on all the apertures **132**. In accordance with another embodiment, the deflectors **134** are disposed on few of the apertures **132** but not all apertures **132**. The apertures **132** and the deflectors **134** on the panel **130** aligned with the first opening **112a,** manoeuvres coolant flow as the coolant flows from the first waterbox **112** to the interior **111** of the housing **110** through the apertures **132**. Similarly, the apertures **132** and the deflectors **134** on the panel **130** aligned with the second opening **114a,** manoeuvres coolant flow as the coolant flows from the interior **111** of the housing **110** to the second waterbox **114**. The apertures **132** configured on the panel **130** ensure uniform distribution of the coolant flowing there through. Accordingly, the panels **130** with the apertures **132** and the deflectors **134** formed thereon manoeuvres coolant flow circulation path from P to P'. Particularly, the panels **130** with the apertures **132** and the deflectors **134** formed thereon manoeuvres coolant flow circulation path to a path P' other than shortest path P between the first opening **112a** and the second opening **114a**. Such configuration of the heat exchanger **100** with apertures **132** and deflectors **134** formed on the panels **130** improve contact between the coolant and the heat exchange elements **120** and enhance heat transfer between air flowing through the airflow passages defined by the heat exchange elements **120** and the coolant surrounding the airflow passages. Such configuration of the heat exchanger **100** prevents formation of dead zones in the heat exchanger core. Also as the deflectors **134** on the panels **130** are not intruding inside the housing **110** such configuration of the heat exchanger **100** improves efficiency and performance of the heat exchanger **100** without intruding inside the housing **110** and without affecting the number of heat exchanger elements receivable inside the housing **110**.

The first opening **112a** is disposed proximal to a first lateral side **110c** of the housing **110**, whereas the second opening **114a** is disposed proximal to a second lateral side wall **110d** opposite to the first lateral side **110c** as illustrated in **FIG. 2**. Referring to **FIG. 4** and **FIG** 5, the panels **130** are complimentary to and aligned with respect to the respective first opening **112a** and the second opening **114a** extending along at least a portion of width of the housing **110** and lateral dimension of the panel **130** is gradually decreasing along length thereof. In another example, the lateral dimension of the panel **130** is gradually decreasing axially in steps along length thereof. In still another example, the lateral dimension of the panel **130** is gradually increasing axially in steps along length thereof. The panel **130** further includes a flange **136** disposed along at least a portion of a periphery thereof. The flange **136** flushes against and is received in a complimentary depression **112b**, **114b** formed around the corresponding first opening **112a** and the second opening **114a**. The flange **136** received in the complimentary depression **112b**, **114b** formed around the corresponding first opening **112a** and second opening **114a** and is joined thereto by brazing. However, the present invention is not limited to any particular method of forming joint between the flange **136** and the complimentary depressions **112b** and **114b** formed around the corresponding first opening **112a** and second opening **114a**.

The plurality of apertures **132** are so arranged on the panel **130** that dimension thereof is gradually changing along length of the panel **130**. The plurality of apertures **132** are so arranged on the panel **130** that dimension thereof is gradually decreasing along length of the panel **130**. In another example, the plurality of apertures **132** are so arranged on the panel **130** that dimension thereof is gradually increasing along length of the panel **130**. However, the dimensions of the apertures **132** and the placement of the apertures **132** is not limited to any particular pattern and can randomly vary along the length of the panel **130**. The plurality of apertures **132** are formed along the length of the panel **130** by stamping operation. The plurality of deflectors **134** are integrally formed with the panel **130** by stamping and bending operation.

Again, referring to enlarged view of the portion of the Water Charged Air Cooler depicted in **FIG. 2b**, each one of the plurality of deflectors **134** formed on the panel **130** is complimentary to and flushes against inside walls of a corresponding waterbox **112** or **114**. The deflectors **134** protrude from the apertures **132** towards the inner volume of the respective waterbox **112**, **114**, wherein the deflectors **134** are connected to the inner surface of the respective waterbox **112**, **114.** Such a configuration of the deflectors **134** provide sufficient surface contact to form a robust brazing connection between the panel **130** and the corresponding waterbox **112** or **114**. Such a configuration of the panel addresses the issue of forming secure and robust connection between the panels and the corresponding waterbox **112** or **114**. Further, with such configuration of the deflectors **134**, the panel **130** can be securely positioned at the interface between the interior of the waterbox and the interior **111** of the housing **110**, without intruding inside the housing **110**. The length of the plurality of deflectors **134** is varying, e.g. there are at least two deflectors which have a different length or a particular deflector **134** is longer if the corresponding waterbox **112** or **114** is raised in that area corresponding to the deflector **134**. The plurality of deflectors **134** can be of different dimension and configuration, particularly, the length, thickness and width, position as well as angle thereof with respect to the panel **130** is based on configuration of the respective waterbox **112**, **114** and aperture **112a**. The plurality of deflectors **134** formed on the panel **130** aligned to the first opening **112a** are formed on the lateral sides of the apertures **132** proximal to the first lateral side wall **110c** of the housing **110.** All the deflectors **134** are either at same angle or different angles to direct coolant from the first waterbox **112** toward a region near the first lateral side wall **110c** of the housing **110** as coolant flows from the first waterbox **112** to the interior **111** of the housing **110** through the corresponding apertures **132**.

The plurality of deflectors **134** formed on the panel **130** aligned to the second opening **114a** are formed on the lateral sides of the apertures **132** proximal to the second lateral side wall **110d** of the housing **110**. All the deflectors **134** are either at same angle or at different angles to receive coolant in the second waterbox **114** from a region near the second lateral side wall **110d** of the housing **110** as the coolant passes through the corresponding apertures **132**.

Based on the configuration of the Water charged Air-Cooler, particularly, based on orientation of heat exchange elements **120,** relative position of the first opening **112a** and the second opening **114a** with respect to the heat exchange elements **120**, the panel **130** with different configuration of the apertures **132** and the deflectors **134** is selected. Based on the configuration of the Water charge Air-Cooler **100**, the panel of a particular configuration, specifically, panel with the apertures **132** at different position, size and orientation and the deflectors **134** at different angles is selected to manoeuvre the coolant flow path between the first opening **112a** and the second opening **114a** to other than the shortest path between the first opening **112a** and the second opening **114a**. Such configuration of the panels **130** with the apertures **132** and the deflectors **134** ensure uniform distribution of the coolant across the core, particularly, across the airflow passages. Accordingly, the formation of dead zones in the core received inside the housing **110** of the Water Charge Air-Cooler **100** is avoided and heat exchange efficiency and performance of the Water Charge Air-Cooler **100** is improved. However, the present invention is not limited to any particular configuration of the panels **130b**, configuration, number and placement of the apertures **132** and the deflectors **134** formed thereon, as far as the apertures and deflectors **134** are capable of manoeuvring coolant flow circulation path to a path P' other than shortest path P between the first opening **112a** and the second opening **114a**.

Several modifications and improvement might be applied by the person skilled in the art to a heat exchanger, as disclosed above and such modifications and improvements will still be considered within the scope and ambit of the present invention, as long as the Water Charge Air-Cooler includes the features of claim 1. The housing receives a heat exchange elements defining airflow passages. The first waterbox is in fluid communication with an interior of the housing via a first opening to distribute coolant around the airflow passages defined by the plurality of heat exchange elements. The second waterbox is in fluid communication with the interior of the housing via a second opening to collect the coolant from the interior of the housing. The at least one panel is aligned with at least one of the first opening and the second opening to limit flow there through. Each panel includes apertures and deflectors. The apertures uniformly distribute coolant flowing there through. The plurality of deflectors are protruding from the apertures towards the inner volume of the respective waterbox and are connected to the inner surface of the waterbox.

## Claims

1. A heat exchanger (100) for a vehicle, comprising:
• a housing (110) adapted to receive a plurality of heat exchange elements (120) defining air flow passages,
• a first waterbox (112) adapted to be in fluid communication with an interior of the housing (110) via a first opening (112a) to distribute a coolant around the air flow passages defined by the plurality of heat exchange elements (120); and
• a second waterbox (114) spaced from the first waterbox (112) and adapted to be in fluid communication with the interior of the housing (110) via a second opening (114a) to collect the coolant from the interior the housing (110),
and at least one panel (130) adapted to be aligned with at least one of the first opening (112a) and the second opening (114a) and to limit flow there-through, each panel (130) comprising:
∘ a plurality of apertures (132); **characterized in that** each panel further comprises
∘ a plurality of deflectors (134) protruding from the apertures (132) towards the inner volume of the respective waterbox (112, 114), wherein the deflectors are connected to the inner surface of said waterbox (112, 114).

2. The heat exchanger (100) as claimed in the previous claim, wherein the length of plurality of deflectors (134) is varying.

3. The heat exchanger (100) as claimed in any of the preceding claims, wherein the first opening (112a) is disposed proximal to a first lateral side wall (110c) of the housing (110), whereas the second opening (114a) is disposed proximal to a second lateral side wall (110d) opposite to the first lateral side wall (110c).

4. The heat exchanger (100) as claimed in any of the preceding claims, wherein the first waterbox (112) and the second waterbox (114) are extending along at least a portion of a width of the housing (110).

5. The heat exchanger (100) as claimed in any of the preceding claims, wherein the panel (130) is complimentary to the respective first opening (112a) and the second opening (114a) extending along at least a portion of a width of the housing (110) and lateral dimension of the panel (130) is gradually decreasing along length thereof.

6. The heat exchanger (100) as claimed in any one of the preceding claims, wherein the panel (130) is gradually decreasing axially in steps along length thereof.

7. The heat exchanger (100) as claimed in any one of the preceding claims, wherein the panel (130) further comprises a flange (136) along at least a portion of a periphery thereof adapted to flush against and be received in a complimentary depression (112b, 114b) formed around the corresponding first opening (112) and second opening(114).

8. The heat exchanger (100) as claimed in the previous claim, wherein the flange (136) received in the complimentary depression (112b, 114b) formed around the corresponding first opening (112a) and second opening (114a) and is joined thereto by brazing.

9. The heat exchanger (100) as claimed in any of the preceding claims, wherein the plurality of apertures (132) are so arranged on the panel (130) that dimension thereof is gradually changing along length of the panel (130).

10. The heat exchanger (100) as claimed in any of the preceding claims, wherein the plurality of apertures (132) are so arranged on the panel (130) that dimension thereof is gradually decreasing along length of the panel (130).

11. The heat exchanger (100) as claimed in any of the preceding claims, wherein the plurality of apertures (132) is so arranged on the panel (130) that dimension thereof is gradually increasing along length of the panel (130).

12. The heat exchanger (100) as claimed in any of the preceding claims, wherein the plurality of apertures (132) are formed along the length of the panel (130) by stamping operation.

13. The heat exchanger (100) as claimed in any of the preceding claims, wherein the plurality of deflectors (134) are integrally formed with the panel (130) by stamping and bending operation.

14. The heat exchanger (100) as claimed in in any of the preceding claims, wherein the plurality of deflectors (134) formed on the panel (130) aligned to the first opening (112a) are formed on the lateral sides of the apertures (132), the deflectors (134) are either at same angle or different angles to direct coolant from the first waterbox (112) toward a region near the first lateral side wall (110c) of the housing (110) as coolant passes through the corresponding apertures (132).

15. The heat exchanger (100) as claimed in any of the preceding claims, wherein the plurality of deflectors (134) formed on the panel (130) covering the second opening (114a) are formed on the lateral sides of the apertures (132), the deflectors (134) are either at same angle or different angles to receive coolant in the second waterbox (114) from a region near the second lateral side wall (110d) of the housing (110) as the coolant passes through the corresponding apertures (132).

## Patentansprüche

1. Wärmetauscher (100) für ein Fahrzeug, Folgendes umfassend:
• ein Gehäuse (110), das dazu eingerichtet ist, mehrere Wärmetauscherelemente (120) aufzunehmen, die Luftströmungsdurchgänge definieren,
• einen ersten Wasserkasten (112), der dazu eingerichtet ist, mit dem Inneren des Gehäuses (110) über eine erste Mündung (112a) in Fluidverbindung zu stehen, um ein Kühlmittel um die Luftströmungsdurchgänge zu verteilen, die durch die mehreren Wärmetauscherelemente (120) definiert sind; und
• einen zweiten Wasserkasten (114), der von dem ersten Wasserkasten (112) beabstandet und dazu eingerichtet ist, mit dem Inneren des Gehäuses (110) über eine zweite Mündung (114a) in Fluidverbindung zu stehen, um das Kühlmittel vom Inneren des Gehäuses (110) zu sammeln, und
mindestens ein Paneel (130), das dazu eingerichtet ist, mit der ersten Mündung (112a) und/oder der zweiten Mündung (114a) ausgerichtet zu sein und die Strömung dort hindurch zu begrenzen, wobei jedes Paneel (130) Folgendes umfasst:
∘ mehrere Öffnungen (132);
**dadurch gekennzeichnet, dass** jedes Paneel ferner Folgendes umfasst:
∘ mehrere Ablenkelemente (134), die von den Öffnungen (132) zum Innenraum des jeweiligen Wasserkastens (112, 114) vorstehen, wobei die Ablenkelemente mit der Innenfläche des Wasserkastens (112, 114) verbunden sind.

2. Wärmetauscher (100) nach dem vorstehenden Anspruch, wobei die Länge der mehreren Ablenkelemente (134) variiert.

3. Wärmetauscher (100) nach einem der vorstehenden Ansprüche, wobei die erste Mündung (112a) neben einer ersten lateralen Seitenwand (110c) des Gehäuses (110) angeordnet ist, wohingegen die zweite Mündung (114a) neben einer der ersten lateralen Seitenwand (110c) entgegengesetzten zweiten lateralen Seitenwand (110d) angeordnet ist.

4. Wärmetauscher (100) nach einem der vorstehenden Ansprüche, wobei sich der erste Wasserkasten (112) und der zweite Wasserkasten (114) entlang zumindest eines Abschnitts einer Breite des Gehäuses (110) erstrecken.

5. Wärmetauscher (100) nach einem der vorstehenden Ansprüche, wobei sich das Paneel (130) passend zur jeweiligen ersten Mündung (112a) und zweiten Mündung (114a) entlang zumindest eines Abschnitts einer Breite des Gehäuses (110) erstreckt und die laterale Abmessung des Paneels (130) entlang dessen Länge allmählich abnimmt.

6. Wärmetauscher (100) nach einem der vorstehenden Ansprüche, wobei das Paneel (130) entlang dessen Länge axial allmählich schrittweise abnimmt.

7. Wärmetauscher (100) nach einem der vorstehenden Ansprüche, wobei das Paneel (130) ferner einen Flansch (136) entlang zumindest eines Abschnitts dessen Umfangs umfasst, der dazu eingerichtet ist, an einer um die erste Mündung (112) bzw. die zweite Mündung (114) ausgebildeten passenden Vertiefung (112b, 114b) bündig anzuliegen und darin aufgenommen zu werden.

8. Wärmetauscher (100) nach dem vorstehenden Anspruch, wobei der in der um die erste Mündung (112a) bzw. die zweite Mündung (114a) ausgebildeten passenden Vertiefung (112b, 114b) aufgenommene Flansch (136) durch Hartlöten damit verbunden ist.

9. Wärmetauscher (100) nach einem der vorstehenden Ansprüche, wobei die mehreren Öffnungen (132) derart auf dem Paneel (130) angeordnet sind, dass sich deren Abmessung entlang der Länge des Paneels (130) allmählich verändert.

10. Wärmetauscher (100) nach einem der vorstehenden Ansprüche, wobei die mehreren Öffnungen (132) derart auf dem Paneel (130) angeordnet sind, dass deren Abmessung entlang der Länge des Paneels (130) allmählich abnimmt.

11. Wärmetauscher (100) nach einem der vorstehenden Ansprüche, wobei die mehreren Öffnungen (132) derart auf dem Paneel (130) angeordnet sind, dass deren Abmessung entlang der Länge des Paneels (130) allmählich zunimmt.

12. Wärmetauscher (100) nach einem der vorstehenden Ansprüche, wobei die mehreren Öffnungen (132) durch einen Stanzvorgang entlang der Länge des Paneels (130) ausgebildet sind.

13. Wärmetauscher (100) nach einem der vorstehenden Ansprüche, wobei die mehreren Ablenkelemente (134) durch einen Stanz- und Biegevorgang in das Paneel (130) integriert ausgebildet sind.

14. Wärmetauscher (100) nach einem der vorstehenden Ansprüche, wobei die mehreren auf dem mit der ersten Mündung (112a) ausgerichteten Paneel (130) ausgebildeten Ablenkelemente (134) auf den lateralen Seiten der Öffnungen (132) ausgebildet sind, wobei die Ablenkelemente (134) entweder in demselben Winkel oder in verschiedenen Winkeln angeordnet sind, um Kühlmittel aus dem ersten Wasserkasten (112) zu einem Bereich in der Nähe der ersten lateralen Seitenwand (110c) des Gehäuses (110) zu leiten, wenn Kühlmittel durch die entsprechenden Öffnungen (132) verläuft.

15. Wärmetauscher (100) nach einem der vorstehenden Ansprüche, wobei die mehreren auf dem die zweite Mündung (114a) abdeckenden Paneel (130) ausgebildeten Ablenkelemente (134) auf den lateralen Seiten der Öffnungen (132) ausgebildet sind, wobei die Ablenkelemente (134) entweder in demselben Winkel oder in verschiedenen Winkeln angeordnet sind, um Kühlmittel von einem Bereich in der Nähe der zweiten lateralen Seitenwand (110d) des Gehäuses (110) im zweiten Wasserkasten (114) aufzunehmen, wenn das Kühlmittel durch die entsprechenden Öffnungen (132) verläuft.

## Revendications

1. Échangeur thermique (100) pour un véhicule, comprenant :
- un logement (110) adapté pour recevoir une pluralité d'éléments d'échange thermique (120) définissant des passages d'écoulement d'air,
- un premier réservoir d'eau (112) adapté pour être en communication fluidique avec un intérieur du logement (110) par le biais d'une première ouverture (112a) pour distribuer un fluide caloporteur autour des passages d'écoulement d'air définis par la pluralité d'éléments d'échange thermique (120) ; et
- un second réservoir d'eau (114) espacé du premier réservoir d'eau (112) et adapté pour être en communication fluidique avec l'intérieur du logement (110) par le biais d'une seconde ouverture (114a) pour recueillir le fluide caloporteur de l'intérieur du logement (110), et
au moins un panneau (130) adapté pour être aligné avec au moins l'une de la première ouverture (112a) et la seconde ouverture (114a) et à limiter un écoulement à travers celles-ci, chaque panneau (130) comprenant :
- une pluralité d'orifices (132) ;
**caractérisé en ce que** chaque panneau (130) comprend, en outre :
- une pluralité de déflecteurs (134) faisant saillie à partir des orifices (132) en direction du volume intérieur du réservoir d'eau respectif (112, 114), les déflecteurs étant raccordés à la surface intérieure dudit réservoir d'eau (112, 114).

2. Échangeur thermique (100) selon la revendication précédente, dans lequel la longueur de la pluralité de déflecteurs (134) varie.

3. Échangeur thermique (100) selon l'une quelconque des revendications précédentes, dans lequel la première ouverture (112a) est disposée à proximité d'une première paroi latérale (110c) du logement (110), tandis que la seconde ouverture (114a) est disposée à proximité d'une seconde paroi latérale (110d) à l'opposé de la première paroi latérale (110c).

4. Échangeur thermique (100) selon l'une quelconque des revendications précédentes, dans lequel le premier réservoir d'eau (112) et le second réservoir d'eau (114) s'étendent le long d'au moins une partie d'une largeur du logement (110).

5. Échangeur thermique (100) selon l'une quelconque des revendications précédentes, dans lequel le panneau (130) est complémentaire respectivement de la première ouverture (112a) et la seconde ouverture (114a) s'étendant le long d'au moins une partie d'une largeur du logement (110) et une dimension latérale du panneau (130) diminue progressivement le long de sa longueur.

6. Échangeur thermique (100) selon l'une quelconque des revendications précédentes, dans lequel le panneau (130) se rétrécit axialement de manière progressive en gradins le long de sa longueur.

7. Échangeur thermique (100) selon l'une quelconque des revendications précédentes, dans lequel le panneau (130) comprend, en outre, un rebord (136) le long d'au moins une partie de sa périphérie qui est adapté pour être accolé à et reçu dans un renfoncement complémentaire (112b, 114b) formé autour des première ouverture (112) et seconde ouverture (114) correspondantes.

8. Échangeur thermique (100) selon la revendication précédente, dans lequel le rebord (136) est reçu dans le renfoncement complémentaire (112b, 114b) formé autour des première ouverture (112) et seconde ouverture (114) correspondantes et est raccordé à celui-ci par brasage.

9. Échangeur thermique (100) selon l'une quelconque des revendications précédentes, dans lequel la pluralité d'orifices (132) sont agencés sur le panneau (130) de telle sorte qu'une dimension de ceux-ci change progressivement le long de la longueur du panneau (130).

10. Échangeur thermique (100) selon l'une quelconque des revendications précédentes, dans lequel la pluralité d'orifices (132) sont agencés sur le panneau (130) de telle sorte qu'une dimension de ceux-ci diminue progressivement le long de la longueur du panneau (130).

11. Échangeur thermique (100) selon l'une quelconque des revendications précédentes, dans lequel la pluralité d'orifices (132) sont agencés sur le panneau (130) de telle sorte qu'une dimension de ceux-ci augmente progressivement le long de la longueur du panneau (130).

12. Échangeur thermique (100) selon l'une quelconque des revendications précédentes, dans lequel la pluralité d'orifices (132) sont formés le long de la longueur du panneau (130) par une opération de poinçonnage.

13. Échangeur thermique (100) selon l'une quelconque des revendications précédentes, dans lequel la pluralité de déflecteurs (134) sont formés de façon à faire partie intégrante du panneau (130) par une opération de poinçonnage et de cintrage.

14. Échangeur thermique (100) selon l'une quelconque des revendications précédentes, dans lequel la pluralité de déflecteurs (134) formés sur le panneau (130) alignés avec la première ouverture (112a) sont formés sur les côtés latéraux des orifices (132), les déflecteurs (134) sont orientés à des angles identiques ou différents pour diriger le fluide caloporteur depuis le premier réservoir d'eau (112) en direction d'une région proche de la première paroi latérale (110c) du logement (110) à mesure que le fluide caloporteur passe à travers les orifices (132) correspondants.

15. Échangeur thermique (100) selon l'une quelconque des revendications précédentes, dans lequel la pluralité de déflecteurs (134) formés sur le panneau (130) couvrant la seconde ouverture (114a) sont formés sur les côtés latéraux des orifices (132), les déflecteurs (134) sont orientés à des angles identiques ou différents pour recevoir dans le second réservoir d'eau (114) le fluide caloporteur provenant d'une région proche de la seconde paroi latérale (110d) du logement (110) à mesure que le fluide caloporteur passe à travers les orifices (132) correspondants.
